# EUROPEAN PATENT APPLICATION

(11) **EP 4 610 918 A1**
(43) Date of publication of application: **03.09.2025**
(21) Application number: 24190874.8
(22) Date of filing: 25.07.2024
(51) Int. Cl.: G06Q 50/20, G09B 5/02, G09B 5/08

(54) **INFORMATION PROCESSING APPARATUS, INFORMATION PROCESSING SYSTEM AND PROGRAM**

(30) Priority: 29.02.2024 JP 2024029746
(71) Applicant: Casio Computer Co., Ltd., Tokyo 151-8543 (JP)
(72) Inventor: Saito, Takuya, Hamura-shi, Tokyo, 205-8555 (JP)
(74) Representative: Grünecker Patent- und Rechtsanwälte PartG mbB

(57) **Abstract**

An information processing apparatus (10) includes a display controller (11) that causes a first terminal apparatus (20A) to display at least one first category article of a first category in response to an educational instructor or administrator selecting a first learning function as an analysis target through the terminal apparatus (20A) or display at least one second category article of a second category to be selectable in response to the educational instructor or administrator selecting a second learning function as the analysis target through the terminal apparatus (20A), derives a utilization state of a learning function by a learner, the learning function being the first learning function or the second learning function selected as the analysis target, based on a category article selected from the at least one first category article or the at least one second category article correlated with the selected learning function, and causes the terminal apparatus (20A) to display the utilization state.

## Description

### TECHNICAL FIELD

The present disclosure relates to an information processing apparatus, an information processing system and a program.

### DESCRIPTION OF RELATED ART

There is a learning management system that analyzes operation log information on lecture takers and aggregates and displays information such as materials and pages where markers have been put and the number of persons who have put the markers (e.g., JP 2018-146845 A).

### SUMMARY OF THE INVENTION

However, the learning management system disclosed in JP 2018-146845 A cannot change a unit of analysis in which the utilization state of a learning function is analyzed, in accordance with a learning function selected by a user from among a plurality of learning functions that the learning management system provides. Hence, the user cannot easily grasp the utilization state of the learning function that the user has selected.

Objects of the present disclosure include making it easy for a user to grasp the utilization state of the learning function that the user has selected.

In order to achieve at least one of the objects, according to an aspect of the present disclosure, there is provided an information processing apparatus including a display controller,
wherein the information processing apparatus is configured to be communicatively connected to a first terminal apparatus configured to be used by an educational instructor or administrator and a plurality of second terminal apparatuses configured to be used by a plurality of leaners,
wherein the plurality of second terminal apparatuses is each provided with a plurality of mutually different learning functions including a first learning function and a second learning function that are used by the plurality of learners,
wherein the plurality of learners is grouped as a first group belonging to a first category correlated with the first learning function and also grouped as a second group belonging to a second category correlated with the second learning function, and
wherein the display controller causes the first terminal apparatus to display at least one first category article of the first category to be selectable in response to the educational instructor or administrator selecting the first learning function as an analysis target through the first terminal apparatus or display at least one second category article of the second category to be selectable in response to the educational instructor or administrator selecting the second learning function as the analysis target through the first terminal apparatus, derives a utilization state of a learning function by a learner of the plurality of learners, the learning function being the first learning function or the second learning function selected as the analysis target, based on a category article selected from the at least one first category article or the at least one second category article correlated with the learning function selected as the analysis target, and causes the first terminal apparatus to display the derived utilization state.

### ADVANTAGEOUS EFFECTS OF THE INVENTION

According to the present disclosure, an educational instructor or an administrator can easily grasp the utilization state of the learning function that the educational instructor or the administrator has selected.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 schematically shows configuration of an information processing system according to an embodiment(s);
FIG. 2 shows a configuration example of databases stored in a server apparatus;
FIG. 3 shows an example of a screen for a student to select an electronic dictionary to use;
FIG. 4 shows an example of a screen for the student to select a notebook to use;
FIG. 5 shows an example of a screen that is displayed when a notebook to be used is selected;
FIG. 6 is a flowchart of an analysis process that is performed by a controller of the server apparatus;
FIG. 7 shows an example of a screen for selecting an item to be analyzed, the screen being displayed when a teacher or an administrator logs in;
FIG. 8A shows an example of a screen for analysis that is displayed when an electronic label function is selected as the item to be analyzed and class is selected as a unit of analysis;
FIG. 8B shows an example of the screen for analysis that is displayed when the electronic label function is selected as the item to be analyzed and lesson is selected as the unit of analysis;
FIG. 8C shows an example of the screen for analysis that is displayed when the electronic label function is selected as the item to be analyzed and school is selected as the unit of analysis;
FIG. 9A shows an example of a screen for analysis that is displayed when an electronic dictionary function is selected as the item to be analyzed and class is selected as the unit of analysis;
FIG. 9B shows an example of the screen for analysis that is displayed when the electronic dictionary function is selected as the item to be analyzed and lesson is selected as the unit of analysis;
FIG. 10A shows an example of a screen for analysis that is displayed when a notebook function is selected as the item to be analyzed and class is selected as the unit of analysis;
FIG. 10B shows an example of the screen for analysis that is displayed when the notebook function is selected as the item to be analyzed and lesson is selected as the unit of analysis;
FIG. 10C shows an example of the screen for analysis that is displayed when the notebook function is selected as the item to be analyzed and school is selected as the unit of analysis;
FIG. 11 shows an example of a screen for analysis that is displayed when the number of accesses is selected as the item to be analyzed;
FIG. 12 shows an example of a graph that is displayed when the electronic label function is selected as the item to be analyzed and class is selected as the unit of analysis;
FIG. 13 shows an example of a graph that is displayed when the electronic label function is selected as the item to be analyzed and school is selected as the unit of analysis;
FIG. 14 shows an example of a graph that is displayed when the electronic dictionary function is selected as the item to be analyzed and class is selected as the unit of analysis;
FIG. 15 shows an example of a graph that is displayed when the notebook function is selected as the item to be analyzed and class is selected as the unit of analysis;
FIG. 16 shows an example of a graph that is displayed when the notebook function is selected as the item to be analyzed and lesson is selected as the unit of analysis; and
FIG. 17 shows an example of a graph that is displayed when the number of accesses is selected as the item to be analyzed.

### DETAILED DESCRIPTION

Hereinafter an information processing system according to an embodiment(s) of the present disclosure will be described in detail with reference to the drawings. The information processing system is used by school administrators, school teachers who are educational instructors, and students who are learners. In this application, the "school" includes all educational institutions, which include not only regular elementary schools, junior high schools, high schools, colleges and universities, but also vocational schools, tutoring schools, preparatory schools and so forth.

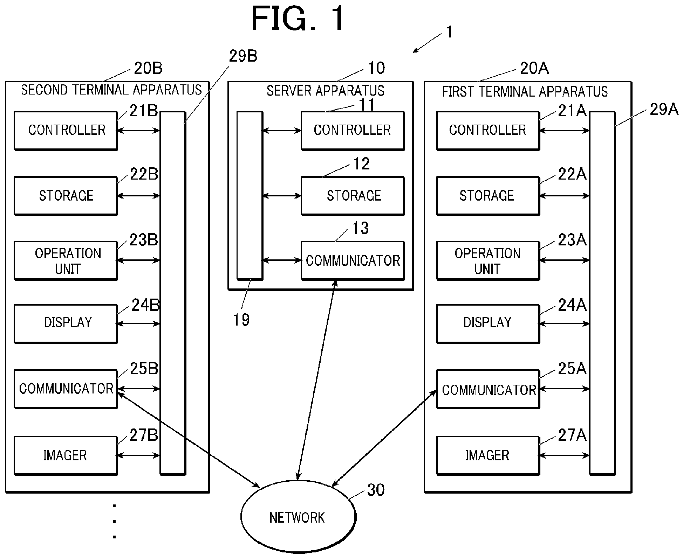

As shown in FIG. 1, an information processing system 1 includes a server apparatus 10 as an information processing apparatus, a first terminal apparatus 20A and a plurality of second terminal apparatuses 20B. The server apparatus 10, the first terminal apparatus 20A and the second terminal apparatuses 20B are communicatively connected via a network 30. The network 30 is a communication network, such as the Internet, a wireless local area network (LAN), a wired LAN, a mobile communication network, a short-range wireless communication network, or a combination of some or all of these. The information processing system 1 may include a plurality of first terminal apparatuses 20A.

The server apparatus 10 is a web server that provides learning support services to the first terminal apparatus 20A and the second terminal apparatuses 20B through the web. As shown in FIG. 1, the server apparatus 10 includes a controller 11, a storage 12 and a communicator 13. These components are connected to one another via a system bus 19.

The controller 11 includes a central processing unit (CPU) and a random access memory (RAM). The CPU of the controller 11 is a processor (computer) that reads and executes programs stored in the storage 12 and performs various types of arithmetic processing, thereby controlling operation of each component of the server apparatus 10. The controller 11 may have a plurality of processors, for example, a plurality of CPUs, and a plurality of processes that is performed by the controller 11 of this embodiment may be performed by the plurality of processors. In this case, the processors may be involved in the same processes or independently perform different processes in parallel. The controller 11 functions as a display controller.

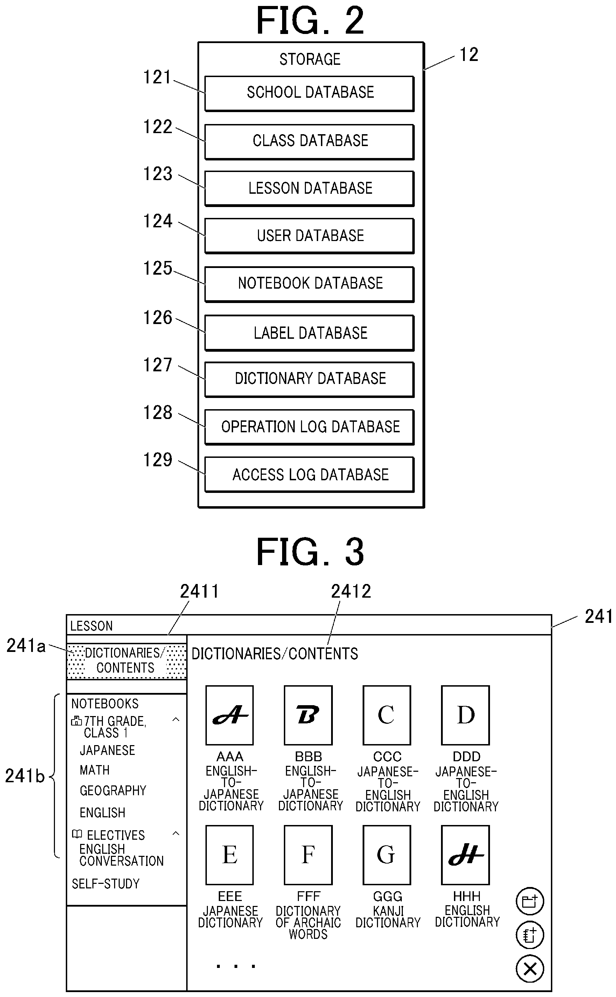

The storage 12 is a non-transitory storage medium readable by the CPU of the controller 11. The storage 12 stores programs and various data. The storage 12 includes a nonvolatile memory, such as a hard disk drive (HDD) or a solid state drive (SSD). As shown in FIG. 2, the storage 12 stores a school database 121, a class database 122, a lesson database 123, a user database 124, a notebook database 125, a label database 126, a dictionary database 127, an operation log database 128 and an access log database 129.

The school database 121 stores information on schools that use the learning support services provided by the information processing system 1. The school database 121 has a table where for each school that uses the learning support services, pieces of information such as a school ID and a school name are correlated and stored. The "school ID" is identification information that uniquely identifies a school that uses the learning support services. The "school name" is the name of the school.

The class database 122 stores information on classes of each school that uses the learning support services. The class database 122 has a table where for each class of each school that uses the learning support services, pieces of information such as a class ID, a class name and a school ID are correlated and stored. The "class ID" is identification information that uniquely identifies a class of a school that uses the learning support services. The "class name" is the name of the class. Examples of the class name include "7th Grade, Class 1". The "school ID" is the ID of a school to which the class belongs.

The lesson database 123 stores information on lessons belonging to each school that uses the learning support services. The lesson database 123 has a table where for each lesson given at each school that uses the learning support services, pieces of information such as a lesson ID, a lesson name, a subject, a teacher-in-charge ID and a school ID are correlated and stored. The "lesson ID" is identification information that uniquely identifies a lesson at each school that uses the learning support services. The "lesson name" is the name of the lesson. Examples of the lesson name include a name made up of a class and a subject in combination, such as "7th Grade, Class 1, Math", and a name of an elective, such as "Elective Chemistry". The "subject" is the name of a subject taught in the lesson. The "teacher-in-charge ID" is the user ID of a teacher who is in charge of the lesson. The "school ID" is the school ID of a school to which the lesson belongs.

The user database 124 stores information on users who use the learning support services. The user database 124 has a table where for each user who uses the learning support services, pieces of information such as a user ID, a password, a user category, a user name, a school ID, a class ID and a lesson ID are correlated and stored. The "user ID" is identification information that uniquely identifies a user who uses the learning support services. The "user category" indicates whether the user is an administrator, a teacher or a student. The "school ID" is the school ID of a school to which the user belongs. The "class ID" is the class ID of a class to which the user belongs if the user is a teacher or a student. The "lesson ID" is the lesson ID of a lesson to which the user belongs. The lesson to which the user belongs is a lesson that the user is in charge of if the user is a teacher, or a lesson that the user takes if the user is a student. As to the class, if the user is a teacher or a student, one class is set, namely, one class is set for each user who is a teacher or a student. As to the lesson, if the user is a teacher or a student, a plurality of lessons is set, namely, a plurality of lessons is set for each user who is a teacher or a student. As to the school, one school is set for each user. The class falls under a first category and a second category, namely, corresponds to a first category article and a second category article, in the present disclosure. The lesson falls under the first category and the second category, namely, corresponds to a first category article and a second category article, in the present disclosure. The school falls under the first category, namely, corresponds to a first category article, in the present disclosure. In other words, users are grouped as a first group belonging to the first category including at least one first category article correlated with a first learning function described below and also grouped as a second group belonging to the second category including at least one second category article correlated with a second learning function described below. The number of persons in each unit of analysis is basically "Class ≤ Lesson < School". In some cases, it could be "Class > Lesson".

The notebook database 125 stores information on notebooks that are electronic notes created in the learning support services. The notebook database 125 has a table where for each notebook created in the learning support services, pieces of information such as a notebook ID, a notebook name, a user ID, a lesson ID, a notebook's thumbnail image and a creation date-and-time are correlated and stored. The "notebook ID" is identification information that uniquely identifies a notebook created. The "user ID" is the user ID of a user who has created the notebook. The "lesson ID" is the lesson ID of a lesson at which the notebook has been created.

The label database 126 stores information on electronic labels (e.g., electronic sticky notes) created in the learning support services. The label database 126 has a table where for each electronic label created in the learning support services, pieces of information such as a label ID, a user ID, a notebook ID, a label type, label contents, a label's thumbnail image and a creation date-and-time are correlated and stored. The "label ID" is identification information that uniquely identifies a label created. The "notebook ID" is the notebook ID of a notebook on which the label has been created. The "label type" is information indicating the type of the label. Examples of the label type include a text label, a link label, a file label, a dictionary label and a math label.

The dictionary database 127 stores information on electronic dictionaries available to users in the learning support services. The dictionary database 127 has a table where for each electronic dictionary available to users in the learning support services, pieces of information such as a dictionary ID, a dictionary name, a dictionary type, a storage location and a dictionary's thumbnail image are correlated and stored. The "dictionary ID" is identification information that uniquely identifies an electronic dictionary available in the learning support services. The "dictionary name" is the name of the electronic dictionary. The "dictionary type" is information indicating the type of the dictionary. Examples of the dictionary type include an English-to-Japanese dictionary and a Japanese dictionary. The "storage location" is information indicating where data of the electronic dictionary is stored. The "dictionary's thumbnail image" is image data of a thumbnail image of, for example, the front cover of the dictionary.

The operation log database 128 stores information on logs of operations made by users in the learning support services. The operation log database 128 has a table where for each operation, pieces of information such as a user ID, an operation ID, an operation date-and-time, a dictionary ID and a lesson ID are correlated and stored. The "user ID" is the user ID of a user who has made an operation. The "operation ID" is identification information that identifies the operation made by the user. The "operation date-and-time" is the date and time at which the operation was made. The "dictionary ID" is identification information that identifies an operated dictionary if the made operation relates to a dictionary. The "lesson ID" is identification information that identifies an operation-made lesson if the made operation relates to a notebook.

The access log database 129 stores logs of accesses to screens of the website that provides the learning support services. The access log database 129 has a table where for each access to each screen of the website, pieces of information such as a user ID, a screen ID and an access date-and-time are correlated and stored. The "user ID" is the user ID of a user who has accessed a screen. The "screen ID" is identification information that identifies the accessed screen. The "access date-and-time" is the date and time of the access.

The storage 12 also stores, for each learning function provided by the server apparatus 10, at least one of class, lesson and school as a unit(s) of analysis, in which the utilization state of a learning function is analyzed. The first learning function described below is correlated with, as units of analysis, class, lesson and school of the first category. The second learning function described below is correlated with, as units of analysis, class and lesson of the second category. The first learning function may be correlated with a unit(s) of analysis different from those of the first category. The second learning function may be correlated with a unit(s) of analysis different from those of the second category. The communicator 13 performs a communication action in accordance with a predetermined communication standard. By this communication action, the communicator 13 transmits and receives data to and from the first terminal apparatus 20A and the second terminal apparatuses 20B via the network 30.

The first terminal apparatus 20A is used by a teacher or an administrator. The first terminal apparatus 20A may be a personal computer, a portable terminal apparatus, such as a tablet, or a mobile communication apparatus, such as a smartphone. The first terminal apparatus 20A includes a controller 21A, a storage 22A, an operation unit 23A, a display 24A, a communicator 25A and an imager 27A. These components are connected to one another via a system bus 29A.

The controller 21A includes a CPU and a RAM. The CPU of the controller 21A is a processor that reads and executes programs stored in the storage 22A and performs various types of arithmetic processing, thereby controlling operation of each component of the first terminal apparatus 20A. The controller 21A may have a plurality of processors, for example, a plurality of CPUs, and a plurality of processes that is performed by the controller 21A of this embodiment may be performed by the plurality of processors. In this case, the processors may be involved in the same processes or independently perform different processes in parallel.

The storage 22A is a non-transitory storage medium readable by the CPU of the controller 21A. The storage 22A stores programs and various data. The storage 22A includes a nonvolatile memory, such as an HDD or an SSD. The programs stored in the storage 22A include a web browser. The operation unit 23A includes at least one of, for example, a keyboard, a touchscreen and a mouse. The operation unit 23A receives operations made by the user and outputs input signals corresponding to the operations to the controller 21A.

The display 24A includes a liquid crystal display (LCD) or an electroluminescence (EL) display. The display 24A performs various types of display in accordance with display information instructed to display by the controller 21A. The communicator 25A performs a communication action in accordance with a predetermined communication standard. By this communication action, the communicator 25A transmits and receives data to and from the server apparatus 10 via the network 30.

The imager 27A is a digital camera including an optical system and an imaging device, such as a charge coupled device (CCD) or a complementary metal oxide semiconductor (CMOS). The imager 27A images an imaging subject, thereby generating image data of a still image or a moving image, and outputs the image data to the controller 21A.

The second terminal apparatuses 20B are used by students. Like the first terminal apparatus 20A, the second terminal apparatuses 20B each may be a personal computer, a portable terminal apparatus, such as or a tablet, or a mobile communication apparatus, such as a smartphone. Each of the second terminal apparatuses 20B includes a controller 21B, a storage 22B, an operation unit 23B, a display 24B, a communicator 25B and an imager 27B. These components are connected to one another via a system bus 29B.

The controller 21B includes a CPU and a RAM. The CPU of the controller 21B is a processor that reads and executes programs stored in the storage 22B and performs various types of arithmetic processing, thereby controlling operation of each component of the second terminal apparatus 20B. The controller 21B may have a plurality of processors, for example, a plurality of CPUs, and a plurality of processes that is performed by the controller 21B of this embodiment may be performed by the plurality of processors. In this case, the processors may be involved in the same processes or independently perform different processes in parallel. The storage 22B, the operation unit 23B, the display 24B, the communicator 25B and the imager 27B are the same as the storage 22A, the operation unit 23A, the display 24A, the communicator 25A and the imager 27A, respectively, and therefore their descriptions will be omitted.

Next, operation of the information processing system 1 will be described. First, processes that are performed by the controller 11 of the server apparatus 10 when each student logs into the website of the learning support services through his/her second terminal apparatus 20B will be described.

When a student logs into the website of the learning support services through his/her second terminal apparatus 20B, the controller 11 of the server apparatus 10 provides learning support services for students to the second terminal apparatus 20B in cooperation with a program stored in the storage 12. The learning support services for students provide a plurality of mutually different learning functions to the second terminal apparatus 20B. Examples of the learning functions provided by the learning support services for students include an electronic dictionary function, a notebook function and an electronic label function. The notebook function and the electronic label function fall under the first learning function in the present disclosure. The electronic dictionary function falls under the second learning function in the present disclosure. The controller 11 provides these mutually different learning functions by performing the following processes.

When a student logs into the website of the learning support services through his/her second terminal apparatus 20B, the controller 11 of the server apparatus 10 generates screen information for displaying, with the browser, a screen 241 for the student to select a learning function to use. Then, the controller 11 causes the communicator 13 to transmit the generated screen information to the second terminal apparatus 20B. Thus, the controller 11 causes the display 24B of the second terminal apparatus 20B to display the screen 241.

As shown in FIG. 3, the screen 241 has an area 2411 and an area 2412. In the area 2411, a selection section for the user to select a learning function to use is displayed. In the selection section, for example, a dictionary/content selection section 241a and a notebook selection section 241b are displayed. The dictionary/content selection section 241a is for the user to select the electronic dictionary function as the learning function to use. The notebook selection section 241b is for the user to select the notebook function as the learning function to use. In the notebook selection section 241b, a selection section for the user to select a lesson (subject) at which the user uses notebooks is displayed. In the area 2412, a user interface (UI) to use the learning function selected in the area 2411 is displayed. In this embodiment, the electronic dictionary function is selected by default, and a list of electronic dictionaries for the user to select an electronic dictionary to use is displayed in the area 2412.

For example, when the login is completed, the controller 11 reads thumbnail images of respective electronic dictionaries stored in the dictionary database 127, generates screen information for displaying, in the area 2412, the screen 241 with the list of the thumbnail images of the electronic dictionaries displayed, and causes the communicator 13 to transmit the generated screen information to the second terminal apparatus 20B.

In the second terminal apparatus 20B, when the communicator 25B receives the screen information on the screen 241 from the server apparatus 10, the controller 21B causes the display 24B to display the screen 241 in cooperation with the browser. When a thumbnail image of an electronic dictionary is selected on the displayed screen 241 by the operation unit 23B being operated, the controller 21B causes the communicator 25B to transmit operation information indicating that an operation to select an electronic dictionary has been made to the server apparatus 10. This operation information includes information such as a user ID, an operation ID, a dictionary ID and an operation date-and-time. The user ID is the user ID of the currently logged-in user. The operation ID is the operation ID representing an operation to select an electronic dictionary. The dictionary ID is the dictionary ID of the selected electronic dictionary.

In the server apparatus 10, when the communicator 13 receives, from the second terminal apparatus 20B, the operation information indicating that an operation to select an electronic dictionary has been made, the controller 11 causes the display 24B of the second terminal apparatus 20B to display the contents of the selected electronic dictionary. For example, the controller 11 reads data of the selected electronic dictionary from the dictionary database 127, generates screen information for displaying the contents of the selected electronic dictionary, and causes the communicator 13 to transmit the generated screen information to the second terminal apparatus 20B.

In the second terminal apparatus 20B, when the communicator 25B receives, from the server apparatus 10, the screen information on the contents of the selected electronic dictionary, the controller 21B causes the display 24B to display the contents of the selected electronic dictionary in cooperation with the browser. When an operation, such as an operation to search for a word, is made on the displayed contents, the controller 21B causes the communicator 25B to transmit, to the server apparatus 10, operation information indicating the made operation. This operation information includes information such as a user ID, an operation ID, a dictionary ID and an operation date-and-time. The user ID is the user ID of the currently logged-in user. The operation ID is the operation ID representing the made operation. The dictionary ID is the dictionary ID of the electronic dictionary in use.

In the server apparatus 10, when the communicator 13 receives, from the second terminal apparatus 20B, the operation information indicating the operation made on the contents of the electronic dictionary, the controller 11 causes the display 24B of the second terminal apparatus 20B to display a screen corresponding to the made operation. For example, if the operation is an operation to issue an instruction to search for a word, the controller 11 searches (the electronic dictionary in use in) the dictionary database 127 for the search-instructed word, and generates screen information for displaying a screen showing the search result. Then, the controller 11 causes the communicator 13 to transmit the generated screen information to the second terminal apparatus 20B. Further, when the communicator 13 receives, from the second terminal apparatus 20B, the operation information indicating the operation made on the contents of the electronic dictionary, the controller 11 adds a record to the operation log database 128 to store an operation log based on the received operation information. For example, if the operation is an operation to search for a word, the controller 11 stores, as the operation log, the user ID of the logged-in student, the operation ID representing search in an electronic dictionary, the search date-and-time, and the dictionary ID of the electronic dictionary used for the search, in the operation log database 128. The display 24B of the second terminal apparatus 20B displays the screen 241, which is for using the electronic dictionary function, by the same procedure as the above when the dictionary/content selection section 241a is pressed by the operation unit 23B being operated, too.

Meanwhile, on the screen 241, when an operation to select a notebook of a lesson is made in the notebook selection section 241b by the operation unit 23B being operated, the controller 21B causes the communicator 25B to transmit operation information indicating that an operation to select the notebook function has been made to the server apparatus 10. This operation information includes information such as a user ID, an operation ID, a lesson ID and an operation date-and-time. The user ID is the user ID of the currently logged-in user. The operation ID is the operation ID representing an operation to select the notebook function. The lesson ID is the lesson ID of the selected lesson.

In the server apparatus 10, when the communicator 13 receives, from the second terminal apparatus 20B, the operation information indicating that an operation to select the notebook function has been made, the controller 11 generates screen information for displaying a screen 242 with the browser, and causes the communicator 13 to transmit the generated screen information to the second terminal apparatus 20B. Thus, the controller 11 causes the display 24B of the second terminal apparatus 20B to display the screen 242. The screen 242 is for the user to use the notebook function and the electronic label function. In this embodiment, the notebook function includes a function to create notebooks and functions offered on notebooks. The electronic label function is a function to create electronic labels. Electronic labels are created on notebooks, and therefore the notebook function includes the electronic label function.

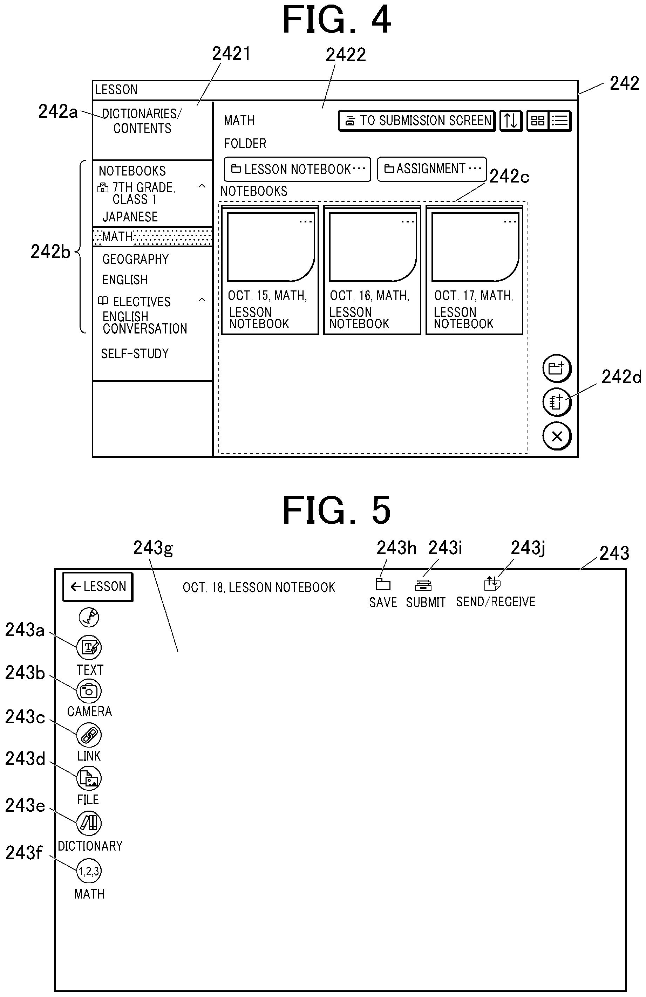

As shown in FIG. 4, the screen 242 has an area 2421 and an area 2422. The area 2421 is the same as the area 2411, and a dictionary/content selection section 242a and a notebook selection section 242b are displayed therein. In the area 2422, a list of notebooks 242c of a selected lesson and an operation button 242d for creating new notebooks are displayed.

For example, the controller 11 searches the notebook database 125 with the user ID and the lesson ID included in the operation information transmitted from the second terminal apparatus 20B. Next, the controller 11 obtains thumbnail images of notebooks from records obtained by the search. Then, as shown in FIG. 4, the controller 11 generates screen information on the screen 242 with the obtained thumbnail images displayed in the list of notebooks 242c, and causes the communicator 13 to transmit the generated screen information to the second terminal apparatus 20B.

In the second terminal apparatus 20B, when the communicator 25B receives, from the server apparatus 10, the screen information for displaying the screen 242, the controller 21B causes the display 24B to display the screen 242 in cooperation with the browser. If the operation button 242d on the screen 242 is pressed by the operation unit 23B being operated, the controller 21B causes the display 24B to display a pop-up screen for creating a new notebook. If, on the pop-up screen, a notebook name is input and an operation button for issuing an instruction to create a notebook is pressed by the operation unit 23B being operated, the controller 21B causes the communicator 25B to transmit operation information indicating that an operation to create a notebook has been made to the server apparatus 10. This operation information includes information such as a user ID, an operation ID, an operation date-and-time, a lesson ID and a notebook name. The user ID is the user ID of the currently logged-in user. The operation ID is the operation ID representing an operation to create a notebook. The lesson ID is the lesson ID of the selected lesson. The notebook name is the input notebook name.

In the server apparatus 10, when the communicator 13 receives, from the second terminal apparatus 20B, the operation information indicating that an operation to create a notebook has been made, the controller 11 issues a new notebook ID. The controller 11 also creates a thumbnail image with the input notebook name and so forth displayed. Next, the controller 11 adds a record to the notebook database 125 to store the notebook name, the user ID, the lesson ID, the notebook's thumbnail image, the creation date-and-time and so forth based on the issued notebook ID and the received operation information. Then, the controller 11 generates screen information on the screen 242 with the thumbnail image of the new notebook added to the list of notebooks 242c, and causes the communicator 13 to transmit the generated screen information to the second terminal apparatus 20B. The controller 11 also adds a record to the operation log database 128 to store the user ID, the operation ID, the operation date-and-time and the lesson ID included in the operation information.

In the second terminal apparatus 20B, when the communicator 25B receives, from the server apparatus 10, the screen information for displaying the screen 242 with the thumbnail image of the new notebook added, the controller 21B causes the display 24B to display the screen 242 in cooperation with the browser.

In the second terminal apparatus 20B, if, on the screen 242, an operation to select a notebook from the list of notebooks 242c is made by the operation unit 23B being operated, the controller 21B causes the communicator 25B to transmit operation information indicating that an operation to select a notebook has been made to the server apparatus 10. This operation information includes a user ID, an operation ID, an operation date-and-time, a lesson ID and a notebook ID. The user ID is the user ID of the currently logged-in user. The operation ID is the operation ID representing an operation to select a notebook. The lesson ID is the lesson ID of the selected lesson. The notebook ID is the notebook ID of the selected notebook.

In the server apparatus 10, when the communicator 13 receives, from the second terminal apparatus 20B, the operation information indicating that an operation to select a notebook has been made, the controller 11 generates screen information on a screen 243 showing the contents of the selected notebook. Then, the controller 11 causes the communicator 13 to transmit the generated screen information to the second terminal apparatus 20B. In the second terminal apparatus 20B, when the communicator 25B receives, from the server apparatus 10, the screen information for displaying the screen 243 of the selected notebook, the controller 21B causes the display 24B to display the screen 243 in cooperation with the browser.

As shown in FIG. 5, on the screen 243, a text label button 243a, a camera label button 243b, a link label button 243c, a file label button 243d, a dictionary label button 243e, a math label button 243f and so forth are arranged. In addition, the screen 243 is provided with a label area 243g. The label area 243g is an area in which an electronic label(s) created on this notebook is displayed. On notebooks, contents that the user has learned and information that the user has obtained for learning are recorded as electronic labels. If there is an already created electronic label, a thumbnail image of the electronic label is displayed in the label area 243g.

The text label button 243a is an operation button for issuing an instruction to create a text label. The text label is an electronic label that records (stores) and displays (shows) text-input information. The camera label button 243b is an operation button for issuing an instruction to create a camera label. The camera label is an electronic label that records and displays an image generated by the imager 27B or the like. The link label button 243c is an operation button for issuing an instruction to create a link label. The link label is an electronic label that records and displays a linked uniform resource locator (URL) on the web. The file label button 243d is an operation button for issuing an instruction to create a file label. The file label is an electronic label that records and displays an image file, a portable document format (PDF) file or the like. The dictionary label button 243e is an operation button for issuing an instruction to create a dictionary label. The dictionary label is an electronic label that records and displays information retrieved from an electronic dictionary. The math label button 243f is an operation button for issuing an instruction to create a math label. The math label is an electronic label that records and displays an input mathematical formula, graph or the like.

On the screen 243, a save ("Save") icon 243h, a submission ("Submit") icon 243i and a transmission/reception ("Send/Receive") icon 243j are also arranged. The save icon 243h is an icon for issuing an instruction to save an electronic label dragged onto the save icon 243h in a predetermined save location. The submission icon 243i is an icon for issuing an instruction to submit an electronic label dragged onto the submission icon 243i to a specified submission destination. The transmission/reception icon 243j is an icon for issuing an instruction to transmit an electronic label dragged onto the transmission/reception icon 243j to a specified transmission destination.

In the second terminal apparatus 20B, if one of the label buttons from the text label button 243a through the math label button 243f on the screen 243 is operated by the operation unit 23B being operated, the controller 21B causes the display 24B to display a UI for creating an electronic label corresponding to the type of the operated label button. The controller 21b creates an electronic label in response to an operation on the displayed UI, and causes the display 24B to display the created electronic label in the label area 243g. The controller 21B then causes the communicator 25B to transmit operation information indicating that an operation to create an electronic label has been made and electronic label information that is the contents of information on the created electronic label to the server apparatus 10. This operation information to be transmitted includes a user ID, an operation ID, an operation date-and-time, a lesson ID and a notebook ID. The user ID is the user ID of the currently logged-in user. The operation ID is the operation ID representing an operation to create an electronic label. This operation ID is an ID that identifies the type of electronic label created. The lesson ID is the lesson ID of the selected lesson. The notebook ID is the notebook ID of the notebook on which the electronic label has been created.

In the server apparatus 10, when the communicator 13 receives, from the second terminal apparatus 20B, the operation information indicating that an operation to create an electronic label has been made and the electronic label information, the controller 11 issues a new label ID and creates a thumbnail image of the created electronic label. Next, the controller 11 adds a record to the label database 126 to store the user ID, the notebook ID, the label type, the contents of the electronic label, the thumbnail image of the electronic label and so forth based on the issued label ID and the received operation information. The controller 11 also adds a record to the operation log database 128 to store, as the operation log, the user ID, the operation ID, the operation date-and-time and so forth based on the received operation information. This information to be stored corresponds to electronic label creation log information.

In the second terminal apparatus 20B, if one of the save icon 243h, the submission icon 243i and the transmission/reception icon 243j on the screen 243 is operated by the operation unit 23B being operated, thereby issuing an instruction to save, submit or transmit/receive an electronic label, the controller 21B causes the communicator 25B to transmit operation information indicating that an operation to issue an insertion to save, submit or transmit/receive an electronic label has been made to the server apparatus 10. This operation information to be transmitted includes a user ID, an operation ID, an operation date-and-time, a label ID, a destination and/or the like. The user ID is the user ID of the currently logged-in user. The operation ID is the operation ID representing an operation to issue an instruction to save, submit or transmit/receive an electronic label. The label ID is the label ID of an electronic label to be saved, submitted or transmitted/received. The destination is information about where to save, submit, or transmit/receive the electronic label.

In the server apparatus 10, when the communicator 13 receives, from the second terminal apparatus 20B, the operation information indicating that an operation to issue an instruction to save, submit or transmit/receive an electronic label has been made, the controller 11 adds a record to the operation log database 128 to store, as the operation log, the user ID, the operation ID and the operation date-and-time. In addition, the controller 11 reads electronic label information having the received label ID from the label database 126 and saves (stores) or transmits/submits the read electronic label information to the specified destination. Thus, when a student logs into the website of the learning support services through his/her second terminal apparatus 20B, the controller 11 of the server apparatus 10 provides the electronic dictionary function, the notebook function and the electronic label function in accordance with operations made by the student.

Every time a screen in the website that provides the learning support services is accessed from the first terminal apparatus 20A or any of the second terminal apparatuses 20B, the controller 11 adds a record to the access log database 129 to store an user ID, a screen ID and an access date-and-time. The user ID is the user ID of the user who has accessed the screen. The screen ID is identification information that identifies the accessed screen. The access date-and-time is the date and time of the access.

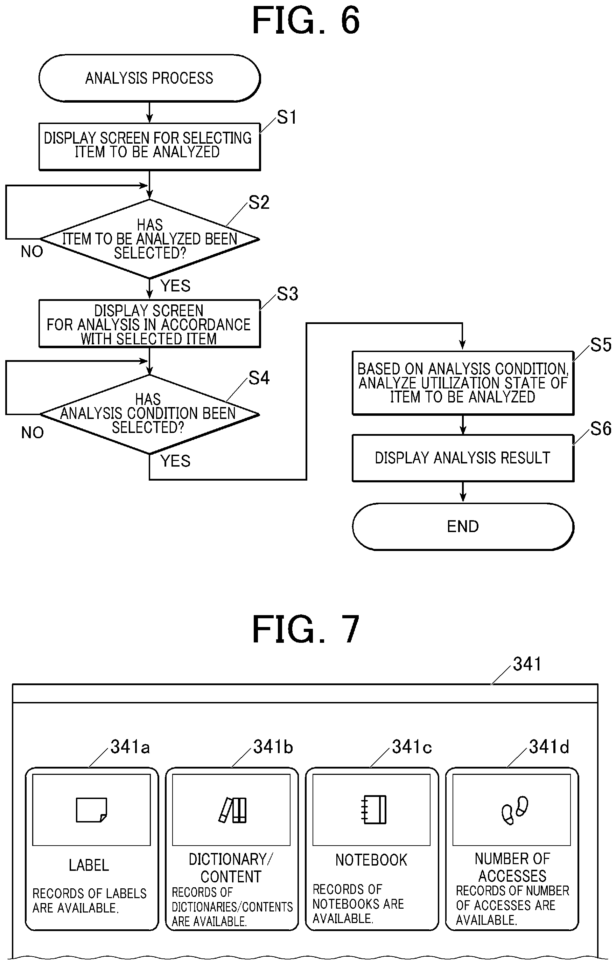

Hereinafter a process that is performed when an administrator or a teacher logs into the learning support services through the first terminal apparatus 20A will be described. When the administrator or a teacher logs in through the first terminal apparatus 20A and makes a predetermined operation to issue an instruction to analyze a learning function, the controller 11 of the server apparatus 10 performs an analysis process shown in FIG. 6. More specifically, the controller 11 performs the analysis process in cooperation with a program stored in the storage 12. Hereinafter the analysis process will be described with reference to FIG. 6.

In the analysis process, first, the controller 11 causes the display 24A of the first terminal apparatus 20A to display a screen 341 for selecting an item to be analyzed (analysis target) (Step S1). For example, the controller 11 generates screen information for displaying the screen 341 with the browser and causes the communicator 13 to transmit the generated screen information to the first terminal apparatus 20A. Thus, the controller 11 causes the display 24A of the first terminal apparatus 20A to display the screen 341.

As shown in FIG. 7, on the screen 341, an electronic label selection button 341a, an electronic dictionary selection button 341b, a notebook selection button 341c and a number-of-accesses selection 341d are arranged. The electronic label selection button 341a is a button for selecting the electronic label function as the item to be analyzed. The electronic dictionary selection button 341b is a button for selecting the electronic dictionary function as the item to be analyzed. The notebook selection button 341c is a button for selecting the notebook function as the item to be analyzed. The number-of-accesses selection button 341d is a button for selecting the number of accesses as the item to be analyzed.

The controller 11 waits until the communicator 13 receives, from the first terminal apparatus 20A, operation information indicating that an operation to select an item to be analyzed has been made (Step S2). In the first terminal apparatus 20A, when the communicator 25A receives the screen information for displaying the screen 341 from the server apparatus 10, the controller 21A causes the display 24A to display the screen 341 in cooperation with the browser, and when one of the selection buttons 341a through 341d is selected on the displayed screen 341 by the operation unit 23A being operated, the controller 21A causes the communicator 25A to transmit the operation information indicating that an operation to select an item to be analyzed has been made to the server apparatus 10. This operation information includes information indicating the selected item.

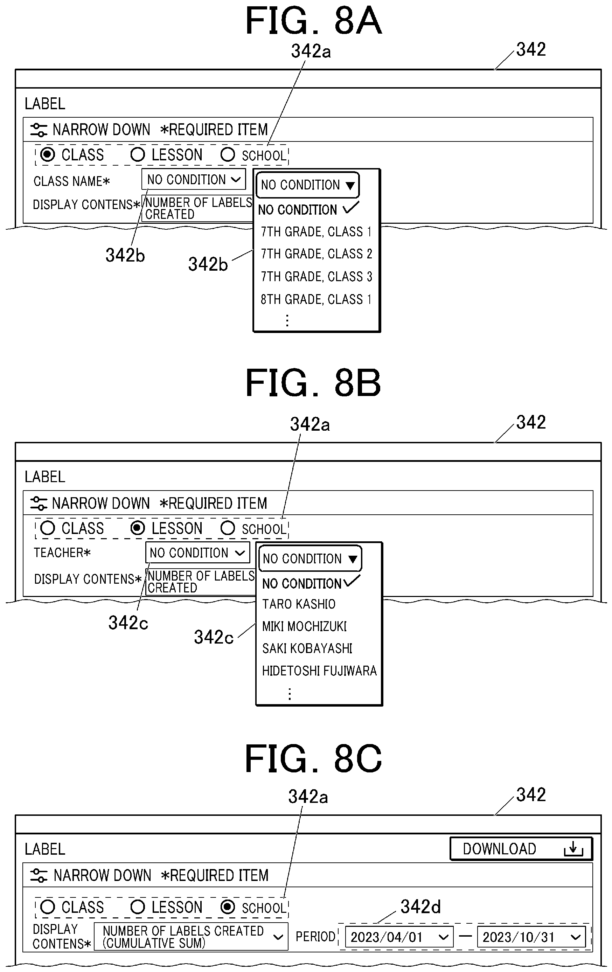

When the communicator 13 receives, from the first terminal apparatus 20A, the operation information indicating that an operation to select an item to be analyzed has been made (Step S2; YES), the controller 11 causes the display 24A of the first terminal apparatus 20A to display one of screens for analysis 342 to 345 shown in FIG. 8A to FIG. 11 in accordance with the selected item (Step S3). More specifically, on the basis of the information on units of analysis (category or category articles) correlated with each learning function stored in the storage 12, the controller 11 determines a category as units of analysis for the selected item. On the basis of the determined category, the controller 11 generates screen information for displaying one of the screens 342 to 345 with the browser, and causes the communicator 13 to transmit the generated screen information to the first terminal apparatus 20A. Thus, the controller 11 causes the display 24A of the first terminal apparatus 20A to display one of the screens 342 to 345 shown in FIG. 8A to FIG. 11 in accordance with the selected item.

The screen 342 is a screen that is displayed when the electronic label function, namely, the first learning function, is selected as the item to be analyzed, as shown in FIG. 8A to FIG. 8C. The screen 342 is a screen for analyzing the utilization state of the electronic label function. As described above, the first learning function is correlated with, as units of analysis, class, lesson and school of the first category. Hence, on the screen 342, a set of radio buttons 342a for selecting class, lesson or school as the unit of analysis is displayed. On the screen 342, if class is selected by the operation unit 23A being operated, a pull-down list 342b for selecting the name of a class to be analyzed is displayed, as shown in FIG. 8A. On the screen 342, if lesson is selected by the operation unit 23A being operated, a pull-down list 342c for selecting a teacher to be analyzed is displayed, as shown in FIG. 8B. On the screen 342, if school is selected by the operation unit 23A being operated, a selection section 342d for selecting a period to be analyzed is displayed, as shown in FIG. 8C.

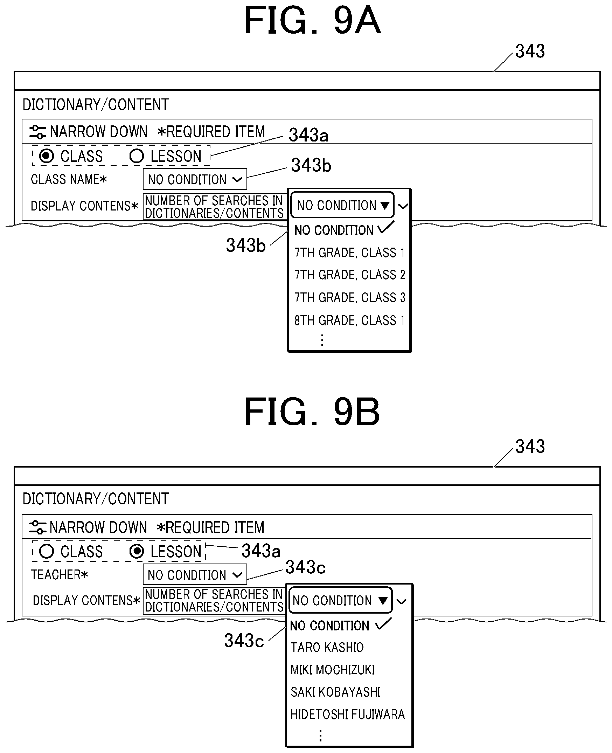

The screen 343 is a screen that is displayed when the electronic dictionary function, namely, the second learning function, is selected as the item to be analyzed, as shown in FIG. 9A and FIG. 9B. The screen 343 is a screen for analyzing the utilization state of the electronic dictionary function. As described above, the second learning function is correlated with, as units of analysis, class and lesson of the second category. Hence, on the screen 343, a set of radio buttons 343a for selecting class or lesson as the unit of analysis is displayed. On the screen 343, a radio button for selecting school is not displayed. The electronic dictionary function uses different dictionaries for different grades. It is therefore meaningless to analyze the utilization state of each electronic dictionary in the entire school. On the screen 343, if class is selected by the operation unit 23A being operated, a pull-down list 343b for selecting the name of a class to be analyzed is displayed, as shown in FIG. 9A. On the screen 343, if lesson is selected by the operation unit 23A being operated, a pull-down list 343c for selecting a teacher to be analyzed is displayed, as shown in FIG. 9B.

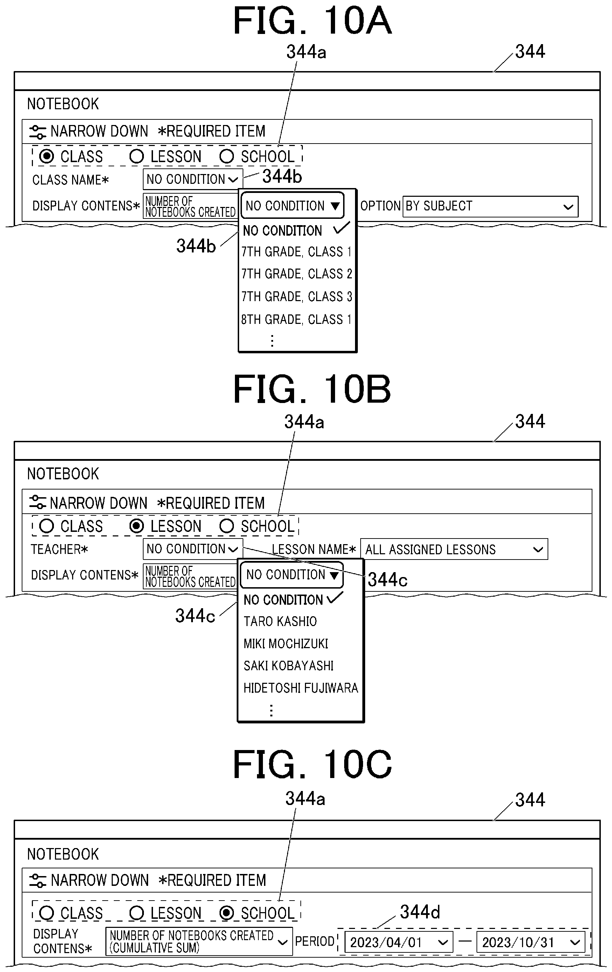

The screen 344 is a screen that is displayed when the notebook function, namely, the first learning function, is selected as the item to be analyzed, as shown in FIG. 10A to FIG. 10C. The screen 344 is a screen for analyzing the utilization state of the notebook function. On the screen 344, a set of radio buttons 344a for selecting class, lesson or school as the unit of analysis is displayed. On the screen 344, if class is selected by the operation unit 23A being operated, a pull-down list 344b for selecting the name of a class to be analyzed is displayed, as shown in FIG. 10A. On the screen 344, if lesson is selected by the operation unit 23A being operated, a pull-down list 344c for selecting a teacher to be analyzed is displayed, as shown in FIG. 10B. On the screen 344, if school is selected by the operation unit 23A being selected, a selection section 344d for selecting a period to be analyzed is displayed, as shown in FIG. 10C.

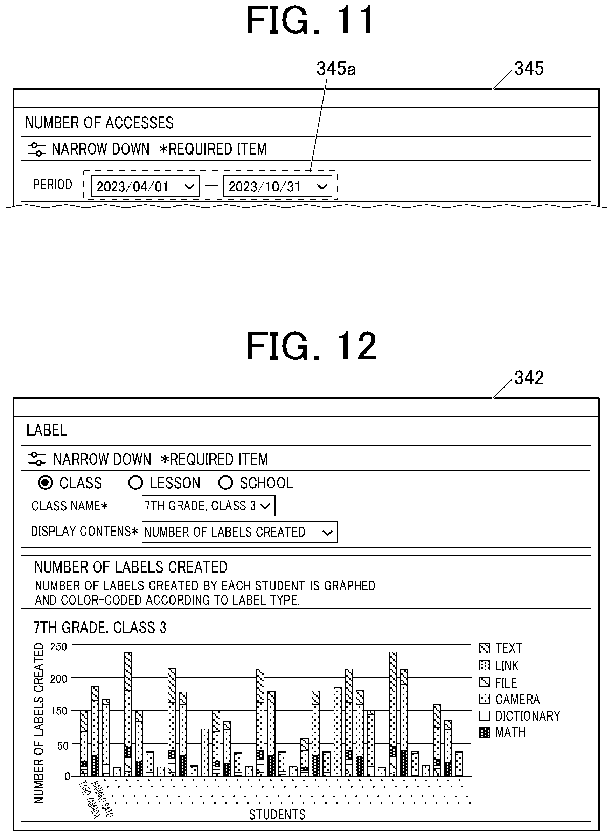

The screen 345 is a screen that is displayed when the number of accesses is selected as the item to be analyzed, as shown in FIG. 11. On the screen 345, a selection section 345a for selecting a period to be analyzed is displayed. On the screen 345, no radio buttons or the like for selecting the unit of analysis are displayed. This is because analysis of the number of accesses is a function for an administrator to easily grasp the utilization state of the learning support services in the entire school.

Thus, the controller 11 performs control to change radio buttons for selecting the unit of analysis in accordance with the selected item, the utilization state of which is to be analyzed, to display a screen for analysis. Further, the controller 11 performs control to display the screen for analysis where items in the pull-down list change in accordance with the unit of analysis selected with a radio button. Thus, only items appropriate as options of analysis conditions of the utilization state of the selected item to be analyzed are displayed. This prevents the user from selecting an inappropriate condition by mistake and allows to appropriately analyze the utilization state of the selected learning function or the like. As a result, the user can easily grasp the utilization state of the selected learning function. In other words, by performing the interaction process with the user, the server apparatus 10 can reliably support the user in carrying out a technical task, namely, in selecting an analysis condition appropriate for each learning function that the server apparatus 10 provides.

The controller 11 waits until the communicator 13 receives, from the first terminal apparatus 20A, operation information indicating that an operation to select an analysis condition has been made (Step S4). More specifically, in the first terminal apparatus 20A, when the communicator 25A receives the screen information on one of the screens 342 to 345 from the server apparatus 10, the controller 21A causes the display 24A to display the received screen in cooperation with the browser, and when an operation to select an analysis condition is made on the displayed screen by the operation unit 23A being operated, the controller 21A causes the communicator 25A to transmit the operation information indicating that an operation to select an analysis condition has been made to the server apparatus 10. This operation information includes information indicating the selected analysis condition including the unit of analysis.

When the communicator 13 receives, from the first terminal apparatus 20A, the operation information indicating that an operation to select an analysis condition has been made (Step S4; YES), the controller 11 analyzes the utilization state of the item to be analyzed on the basis of the selected analysis condition (Step S5). Then, the controller 11 causes the display 24A of the first terminal apparatus 20A to display an analysis result screen (Step S6). In other words, the controller 11 generates screen information for displaying the analysis result with the browser and causes the communicator 13 to transmit the generated screen information to the first terminal apparatus 20A.

For example, if "Label" (electronic label function), "Class", "7th Grade, Class 1" and "Number of Labels Created" are selected as the item to be analyzed, the unit of analysis, the name of a class to be analyzed and the display contents, respectively, the controller 11 derives, for each student belonging to the class selected to be analyzed, the number of created electronic labels by label type. For example, first, the controller 11 extracts students belonging to the selected class from the user database 124. Next, the controller 11 derives, for each extracted student, the number of created electronic labels by label type on the basis of the data stored in the operation log database 128. Then, the controller 11 graphs the number of electronic labels created by each extracted student, showing different label types in different manners, and generates screen information for displaying the graph on the screen 342. In the first terminal apparatus 20A, when the communicator 25A receives, from the server apparatus 10, the screen information on the screen 342 with the graph displayed, the controller 21A causes the display 24A to display the received screen 342 in cooperation with the browser. As shown in FIG. 12, on the screen 342, the graph is displayed in which the horizontal axis shows students belonging to 7th Grade, Class 3 and the vertical axis shows the number of electronic labels created. The graph shows different label types in different manners, for example, in different colors (color-corded according to label type). The teacher or the administrator can grasp what type of electronic label each student belonging to the selected class has created and used for learning. In other words, by performing the interaction process with the user, the server apparatus 10 can reliably support the user in carrying out a technical task, namely, in analyzing the utilization state of the electronic label function, which is provided by the server apparatus 10, class by class.

For example, if "Label" (electronic label function), "Lesson", "Teacher A" and "Number of Labels Created" are selected as the item to be analyzed, the unit of analysis, a teacher to be analyzed and the display contents, respectively, the controller 11 derives, for each student belonging to each lesson that the teacher A selected to be analyzed is in charge of, the number of created electronic labels by label type. For example, first, the controller 11 extracts, for each lesson that the selected teacher A is in charge of, students belonging to the lesson from the user database 124. Next, the controller 11 derives, for each lesson that the selected teacher A is in charge of, the number of electronic labels created by each extracted student by label type on the basis of the data stored in the operation log database 128. Then, the controller 11 graphs, for each lesson that the selected teacher A is in charge of, the number of electronic labels created by each extracted student, showing different label types in different manners, and generates screen information for displaying the graphs on the screen 342. In the first terminal apparatus 20A, when the communicator 25A receives, from the server apparatus 10, the screen information on the screen 342 with the graphs displayed, the controller 21A causes the display 24A to display the received screen 342 in cooperation with the browser. On the screen 342, the graph for each lesson is displayed in which the horizontal axis shows students belonging to the lesson and the vertical axis shows the number of electronic labels created. The graph shows different label types in different manners, for example, in different colors. The teacher or the administrator can grasp what type of electronic label each student who takes a lesson that the teacher is in charge of has created and used for learning. In other words, by performing the interaction process with the user, the server apparatus 10 can reliably support the user in carrying out a technical task, namely, in analyzing the utilization state of the electronic label function, which is provided by the server apparatus 10, lesson by lesson.

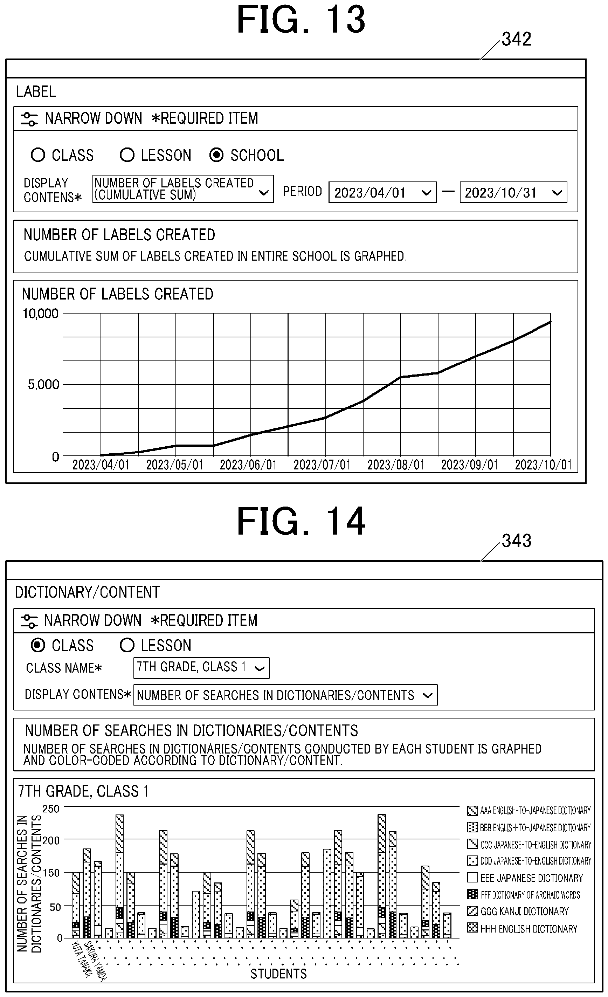

For example, if "Label" (electronic label function), "School" and "Number of Labels Created" are selected as the item to be analyzed, the unit of analysis and the display contents, respectively, the controller 11 derives change in the total number of electronic labels created in a school to which the logged-in user belongs (school correlated with the user in the user database 124) over a specified period of time. For example, first, the controller 11 extracts students belonging to the school from the user database 124. Next, the controller 11 calculates, at intervals of a predetermined period, the total number (cumulative sum) of electronic labels created by the extracted students from the start of the specified period on the basis of the data stored in the operation log database 128. Then, the controller 11 graphs the calculated cumulative sums to be arranged in chronological order, and generates screen information for displaying the graph on the screen 342. In the first terminal apparatus 20A, when the communicator 25A receives, from the server apparatus 10, the screen information on the screen 342 with the graph displayed, the controller 21A causes the display 24A to display the received screen 342 in cooperation with the browser. As shown in FIG. 13, on the screen 342, the graph is displayed in which the horizontal axis shows the period and the vertical axis shows the (total) number of electronic labels created in the entire school. The administrator can grasp change in the creation state of electronic labels in the entire school over a specified period of time. In other words, by performing the interaction process with the user, the server apparatus 10 can reliably support the user in carrying out a technical task, namely, in analyzing the utilization state of the electronic label function, which is provided by the server apparatus 10, as the entire school.

For example, if "Dictionary/Content" (electronic dictionary function), "Class", "7th Grade, Class 1" and "Number of Searches in Dictionaries/Contents" are selected as the item to be analyzed, the unit of analysis, the name of a class to be analyzed and the display contents, respectively, the controller 11 derives, for each student belonging to the class selected to be analyzed, the number of searches in each electronic dictionary. For example, first, the controller 11 extracts students belonging to the selected class from the user database 124. Next, the controller 11 derives, for each extracted student, the number of searches in each electronic dictionary on the basis of the data stored in the operation log database 128. Then, the controller 11 graphs the number of searches in electronic dictionaries conducted by each extracted student, showing different electronic dictionaries in different manners, and generates screen information for displaying the graph on the screen 343. In the first terminal apparatus 20A, when the communicator 25A receives, from the server apparatus 10, the screen information on the screen 343 with the graph displayed, the controller 21A causes the display 24A to display the received screen 343 in cooperation with the browser. As shown in FIG. 14, on the screen 343, the graph is displayed in which the horizontal axis shows students belonging to 7th Grade, Class 1 and the vertical axis shows the number of searches in electronic dictionaries. The graph shows different electronic dictionaries in different manners, for example, in different colors (color-corded according to dictionary). The teacher or the administrator can grasp what dictionary each student belonging to the selected class has been interested in and used for homework or self-study. In other words, by performing the interaction process with the user, the server apparatus 10 can reliably support the user in carrying out a technical task, namely, in analyzing the utilization state of the electronic dictionary function, which is provided by the server apparatus 10, class by class.

For example, if "Dictionary/Content" (electronic dictionary function), "Lesson", "Teacher A" and "Number of Searches in Dictionaries/Contents" are selected as the item to be analyzed, the unit of analysis, a teacher to be analyzed and the display contents, respectively, the controller 11 derives, for each student belonging to each lesson that the teacher A selected to be analyzed is in charge of, the number of searches in each electronic dictionary. For example, first, the controller 11 derives, for each lesson that the selected teacher A is in charge of, students belonging to the lesson from the user database 124. Next, the controller 11 derives, for each lesson that the selected teacher A is in charge of, the number of searches in each electronic dictionary conducted by each extracted student on the basis of the data stored in the operation log database 128. Then, the controller 11 graphs, for each lesson that the selected teacher A is in charge of, the number of searches in electronic dictionaries conducted by each extracted student, showing different electronic dictionaries in different manners, and generates screen information for displaying the graphs on the screen 343. In the first terminal apparatus 20A, when the communicator 25A receives, from the server apparatus 10, the screen information on the screen 343 with the graphs displayed, the controller 21A causes the display 24A to display the received screen 343 in cooperation with the browser. On the screen 343, the graph for each lesson is displayed in which the horizontal axis shows students belonging to the lesson and the vertical axis shows the number of searches in electronic dictionaries. The graph shows different electronic dictionaries in different manners, for example, in different colors. By viewing the graph(s), the teacher can check whether each student has used a dictionary as expected in light of the contents of the lesson. Also, the teacher or the administrator can grasp what dictionary each student who takes the lesson has been interested in and used for homework or self-study. In other words, by performing the interaction process with the user, the server apparatus 10 can reliably support the user in carrying out a technical task, namely, in analyzing the utilization state of the electronic dictionary function, which is provided by the server apparatus 10, lesson by lesson.

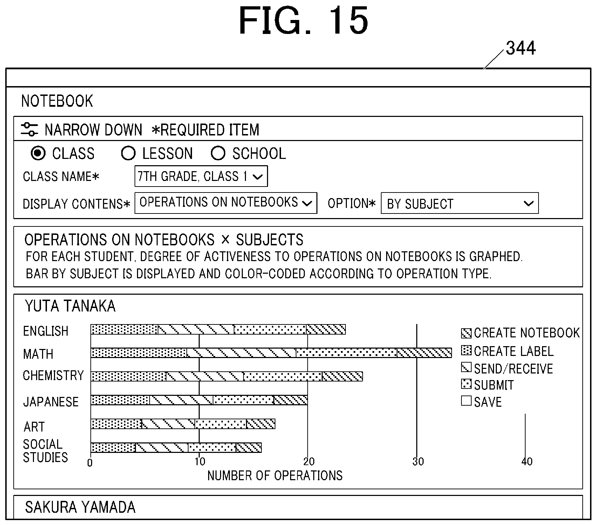

For example, if "Notebook" (notebook function), "Class", "7th Grade, Class 1" and "Operations on Notebooks" are selected as the item to be analyzed, the unit of analysis, the name of a class to be analyzed and the display contents, respectively, and also "By Subject" is selected as an option, the controller 11 derives, for each student belonging to the class selected to be analyzed, the number of operations on notebooks by subject and by operation type. For example, first, the controller 11 extracts students belonging to the selected class from the user database 124. Next, the controller 11 derives, for each extracted student, the number of operations by operation type made on notebooks by subject on the basis of the data stored in the operation log database 128. Then, the controller 11 graphs, for each extracted student, the number of operations by operation type made on notebooks by subject, and generates screen information for displaying the graphs on the screen 344. In the first terminal apparatus 20A, when the communicator 25A receives, from the server apparatus 10, the screen information on the screen 344 with the graphs displayed, the controller 21A causes the display 24A to display the received screen 344 in cooperation with the browser. As shown in FIG. 15, on the screen 344, the graph for each student is displayed in which the vertical axis shows subjects and the horizontal axis shows the number of operations on notebooks. The graph shows different operation types in different manners, for example, in different colors (color-coded according to operation type). By viewing the graphs shown in FIG. 15, the teacher or the administrator can grasp what type of operation each student has actively made on notebooks at each/what subject. In other words, by performing the interaction process with the user, the server apparatus 10 can reliably support the user in carrying out a technical task, namely, in analyzing the utilization state of the notebook function, which is provided by the server apparatus 10, student by student and subject by subject.

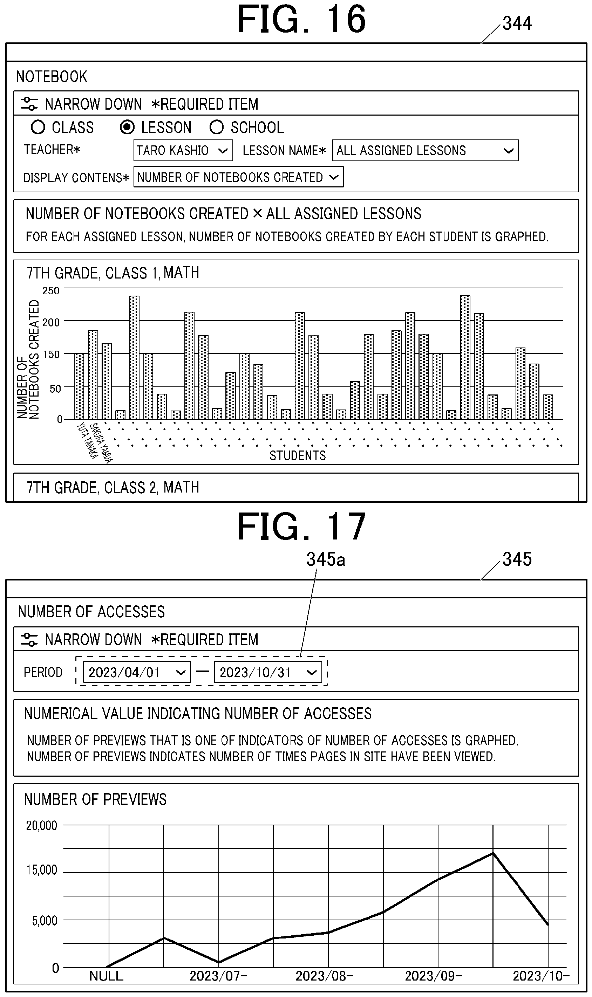

For example, if "Notebook" (notebook function), "Lesson", "Taro Kashio", "All Assigned Lessons" and "Number of Notebooks Created" are selected as the item to be analyzed, the unit of analysis, a teacher to be analyzed, the name of a lesson to be analyzed and the display contents, respectively, the controller 11 derives, for each lesson that Mr. Taro Kashio selected to be analyzed is in charge of, the number of operations to create a notebook (number of notebooks created) made by each student belonging to the lesson. For example, first, the controller 11 extracts, for each lesson that Mr. Taro Kashio is in charge of, students belonging to the lesson from the user database 124. Next, the controller 11 derives, for each lesson that Mr. Taro Kashio is in charge of, the number of notebooks created by each extracted student on the basis of the data stored in the operation log database 128. Then, the controller 11 graphs, for each lesson that Mr. Taro Kashio is in charge of, the number of notebooks created by each student belonging to the lesson, and generates screen information for displaying the graphs on the screen 344. In the first terminal apparatus 20A, when the communicator 25A receives, from the server apparatus 10, the screen information on the screen 344 with the graphs displayed, the controller 21A causes the display 24A to display the received screen 344 in cooperation with the browser. As shown in FIG. 16, on the screen 344, the graph for each lesson that the selected teacher is in charge of is displayed in which the horizontal axis shows students belonging to the lesson and the vertical axis shows the number of notebooks created. By checking the graphs as shown in FIG. 16, the administrator can check teachers who have utilized the learning support services in his/her lessons and who have not. Further, the teacher can compare his/her lessons in the number of notebooks created and make good use of the result to improve his/her lessons. In other words, by performing the interaction process with the user, the server apparatus 10 can reliably support the user in carrying out a technical task, namely, in analyzing users who have utilized the learning functions provided by the server apparatus 10 and who have not.

The screen 344 that is displayed when "Notebook" (notebook function) and "School" are selected as the item to be analyzed and the unit of analysis, respectively, is similar to the screen 342 shown in FIG. 13, provided that "Number of Notebooks Created" is analyzed instead of "Number of Labels Created". Hence, the description of the screen 344 in this case will be omitted. The administrator can grasp change in the creation state of notebooks in the entire school over a specified period of time.

For example, if "Number of Accesses" and "2023/04/01 - 2023/10/31" are selected as the item to be analyzed and a period, the controller 11 derives, as the number of accesses in the period, the number of pageviews (PVs) at intervals of a predetermined period (e.g., every half month). For example, the controller 11 aggregates the number of PVs at intervals of a predetermined period in the selected period on the basis of the data stored in the access log database 129. Then, the controller 11 graphs the number of PVs at intervals of the predetermined period in the selected period, and generates screen information for displaying the graph on the screen 345. In the first terminal apparatus 20A, when the communicator 25A receives, from the server apparatus 10, the screen information on the screen 345 with the graph displayed, the controller 21A causes the display 24A to display the received screen 345 in cooperation with the browser. As shown in FIG. 17, on the screen 345, the graph is displayed in which the horizontal axis shows the period and the vertical axis shows the number of PVs. The administrator can grasp change in the access state to the learning support services over a specified period of time. In other words, by performing the interaction process with the user, the server apparatus 10 can reliably support the user in carrying out a technical task, namely, in analyzing the access state to the learning functions provided by the server apparatus 10. The number of accesses is not limited to the number of PVs but may be another as far as it indicates the number of accesses to the plurality of learning functions in a school to which the user belongs. For example, the number of sessions may be used instead of the number of PVs. The graphs displayed on the screens 342 to 345 show the derivation results (analysis results) of the utilization state of the item selected to be analyzed.

The server apparatus 10 may store, in the storage 12 or the like, academic performance information on each student who uses the learning support services with his/her user ID correlated, for example. Then, if class or lesson is selected as the unit of analysis, in which the utilization state of a learning function is analyzed, the controller 11 may cause the display 24A of the first terminal apparatus 20A to display, for each student belonging to the selected class or lesson, the utilization state of the electronic label function, the notebook function or the electronic dictionary function and his/her academic performance information next to one another. For example, if, on the screen 342, 343 or 344, a graph/bar/column for each student is displayed, the graph/bar/column for each student and his/her academic performance information may be displayed next to one another. Thus, the teacher or the administrator can compare students who have used the electronic label function or the notebook function frequently with students who have used it infrequently in academic performance, thereby grasping correlation between utilization of the electronic label function or the notebook function and academic performance. Similarly, the teacher or the administrator can compare students whose number of searches in electronic dictionaries is large with students whose number of searches in electronic dictionaries is small in academic performance, thereby easily grasping correlation between the number of searches in electronic dictionaries and academic performance. Further, the controller 11 may notify students whose number of electronic labels or notebooks created (or number of operations) is equal to or less than a predetermined threshold value and also whose academic performance is equal to or less than a predetermined threshold value to use electronic labels. For example, the controller 11 may cause the display 24B to display a message notifying such students to use the electronic label function or the notebook function when they each log in. This can automatically encourage the students who do not use the learning functions often to use these.

As described above, the controller 11 of the server apparatus 10 causes the first terminal apparatus 20A to display at least one first category article of the first category to be selectable in response to an educational instructor or administrator selecting the first learning function as the analysis target through the first terminal apparatus 20A. The controller 11 causes the first terminal apparatus 20A to display at least one second category article of the second category to be selectable in response to the educational instructor or administrator selecting the second learning function as the analysis target through the first terminal apparatus 20A. The controller 11 derives the utilization state of a learning function by a learner, the learning function being selected as the analysis target, based on a category article selected from the at least one first category article or the at least one second category article correlated with the learning function selected as the analysis target, and causes the first terminal apparatus 20A to display the derived utilization state. Thus, only items appropriate as options of analysis conditions of the utilization state of the learning function selected as the analysis target are displayed by the first terminal apparatus 20A. This prevents the user (educational instructor or administrator) from selecting an inappropriate condition by mistake and allows to appropriately analyze the utilization state of the selected learning function or the like. As a result, the user can easily grasp the utilization state of the selected learning function.

Further, the controller 11 causes the first terminal apparatus 20A to display the number of accesses to the plurality of learning functions in a school to which the educational instructor or administrator belongs, in response to the educational instructor or administrator selecting the number of accesses as the analysis target through the first terminal apparatus 20A. Thus, the educational instructor or administrator can easily grasp the number of accesses to the plurality of learning functions in a school to which the educational instructor or administrator belongs.

Those described in the above embodiment are not limitations but merely some preferable examples of the information processing apparatus, the information processing system and the programs of the present disclosure. For example, the pieces of information stored in the databases described in the above embodiment are not limitations but merely some preferable examples.

Further, for example, in the above embodiment, as the computer-readable storage medium storing the programs for performing the processes, the HDD or the nonvolatile semiconductor memory is used, but the computer-readable storage medium is not limited thereto. The computer-readable storage medium may be a portable storage medium, such as a CD-ROM. Further, as a medium that provides data of the programs via a communication line, a carrier wave is applicable.

## Claims

1. An information processing apparatus (10) comprising a display controller (11),
wherein the information processing apparatus (10) is configured to be communicatively connected to a first terminal apparatus (20A) configured to be used by an educational instructor or administrator and a plurality of second terminal apparatuses (20B) configured to be used by a plurality of leaners,
wherein the plurality of second terminal apparatuses (20B) is each provided with a plurality of mutually different learning functions including a first learning function and a second learning function that are used by the plurality of learners,
wherein the plurality of learners is grouped as a first group belonging to a first category correlated with the first learning function and also grouped as a second group belonging to a second category correlated with the second learning function, and
wherein the display controller (11) causes the first terminal apparatus (20A) to display at least one first category article of the first category to be selectable in response to the educational instructor or administrator selecting the first learning function as an analysis target through the first terminal apparatus (20A) or display at least one second category article of the second category to be selectable in response to the educational instructor or administrator selecting the second learning function as the analysis target through the first terminal apparatus (20A), derives a utilization state of a learning function by a learner of the plurality of learners, the learning function being the first learning function or the second learning function selected as the analysis target, based on a category article selected from the at least one first category article or the at least one second category article correlated with the learning function selected as the analysis target, and causes the first terminal apparatus (20A) to display the derived utilization state.

2. The information processing apparatus (10) according to claim 1,
wherein the at least one first category article includes class, lesson and school, and
wherein the at least one second category article includes the class and the lesson.

3. The information processing apparatus (10) according to claim 2, wherein in response to the selected category article being the class, the display controller (11) causes the first terminal apparatus (20A) to display a plurality of classes in a school to which the educational instructor or administrator belongs such that a class to be analyzed is selectable therefrom, derives the utilization state of the learning function by the learner who belongs to the class selected from the plurality of classes, the learning function being selected as the analysis target, and causes the first terminal apparatus (20A) to display the derived utilization state.

4. The information processing apparatus (10) according to claim 2,
wherein as to the class of the first category and the second category, one class is set for each of the plurality of learners,
wherein as to the lesson of the first category and the second category, a plurality of lessons is set for each of the plurality of learners, and
wherein as to the school of the first category, one school is set for each of the plurality of learners.

5. The information processing apparatus (10) according to claim 1, wherein the first learning function includes an electronic label function and a notebook function.

6. The information processing apparatus (10) according to claim 1, wherein the second learning function includes an electronic dictionary function.

7. The information processing apparatus (10) according to claim 1, wherein in response to the educational instructor or administrator selecting a number of accesses as the analysis target through the first terminal apparatus (20A), the display controller (11) causes the first terminal apparatus (20A) to display the number of accesses to the plurality of mutually different learning functions in a school to which the educational instructor or administrator belongs.

8. The information processing apparatus (10) according to claim 1, wherein the display controller (11) causes the first terminal apparatus (20A) to display the utilization state of the learning function by the learner, the learning function being selected as the analysis target, and academic performance information on the learner next to one another.

9. An information processing system (1) comprising:
the information processing apparatus (10) according to any one of claims 1 to 8;
the first terminal apparatus (20A) configured to be communicatively connected to the information processing apparatus (10); and
the plurality of second terminal apparatuses (20B) configured to be communicatively connected to the information processing apparatus (10).

10. A program that causes, of an information processing apparatus (10) configured to be communicatively connected to a first terminal apparatus (20A) configured to be used by an educational instructor or administrator and a plurality of second terminal apparatuses (20B) configured to be used by a plurality of learners, the plurality of second terminal apparatuses (20B) being each provided with a plurality of mutually different learning functions including a first learning function and a second learning function that are used by the plurality of learners that is grouped as a first group belonging to a first category correlated with the first learning function and also grouped as a second group belonging to a second category correlated with the second learning function, a computer (11) to
cause the first terminal apparatus (20A) to display at least one first category article of the first category to be selectable in response to the educational instructor or administrator selecting the first learning function as an analysis target through the first terminal apparatus (20A) or display at least one second category article of the second category to be selectable in response to the educational instructor or administrator selecting the second learning function as the analysis target through the first terminal apparatus (20A), derive a utilization state of a learning function by a learner of the plurality of learners, the learning function being the first learning function or the second learning function selected as the analysis target, based on a category article selected from the at least one first category article or the at least one second category article correlated with the learning function selected as the analysis target, and cause the first terminal apparatus (20A) to display the derived utilization state.
